(19) Europäisches Patentamt / European Patent Office / Office européen des brevets

(11) **EP 4 253 278 A1**

(12) **EUROPEAN PATENT APPLICATION**
published in accordance with Art. 153(4) EPC

(43) Date of publication:
**04.10.2023 Bulletin 2023/40**

(21) Application number: **21897544.9**

(22) Date of filing: **18.10.2021**

(51) International Patent Classification (IPC):
**B65D 65/40** (2006.01)  **B32B 27/32** (2006.01)
**B65D 75/36** (2006.01)

(52) Cooperative Patent Classification (CPC):
**B32B 27/32; B65D 65/40; B65D 75/36;**
Y02W 30/80

(86) International application number:
**PCT/JP2021/038438**

(87) International publication number:
**WO 2022/113566 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.11.2020   JP 2020194643**

(71) Applicant: **Asahi Kasei Kabushiki Kaisha
Tokyo 1000006 (JP)**

(72) Inventors:
• **ASANO, Masafumi
  Tokyo 100-0006 (JP)**
• **KONDO, Motoki
  Tokyo 100-0006 (JP)**

(74) Representative: **D Young & Co LLP
120 Holborn
London EC1N 2DY (GB)**

(54) **COVER MATERIAL FOR PTP, AND PTP PACKAGE**

(57)   A lid material for PTP contains a polypropylene-based resin having a weight-average molecular weight of $2.0 \times 10^5$ to $3.5 \times 10^5$ and has an enthalpy of crystal fusion of 70 J/g or more as measured by a differential scanning calorimeter (DSC).

*FIG. 1*

EP 4 253 278 A1

## Description

TECHNICAL FIELD

The present disclosure relates to a lid material for press-through packaging (PTP) and a PTP body.

BACKGROUND

A PTP body including a bottom material and a lid material is known as one form of packaging for medicine, food, and so forth. A PTP body is produced by performing vacuum forming or pressure forming with respect to a plastic sheet formed of a polyvinyl chloride-based resin, polypropylene-based resin, or the like so as to form a bottom material having a pocket-shaped cavity, loading contained matter into this cavity, and subsequently heat sealing a lid material to a flange portion that is a portion other than the cavity. The contained matter that is accommodated can be taken out by applying force to the contained matter in a direction toward the lid material from an outer side of the bottom material such that the contained matter breaks through the lid material.

Aluminum foil, glassine paper, and the like that excel in terms of a property of easily being ruptured through pressing out of contained matter (outward penetrability) have conventionally been used as lid materials. However, in light of trends toward reduction and recycling of disposable plastic products and switching to renewable resources in recent years, there has been interest in environmentally friendly PTP bodies in which a plastic sheet is used not only for the bottom material but also for the lid material in order to enable recycling without the need for separation upon disposal as garbage.

For example, Patent Literature (PTL) 1 discloses a lid material that has a polypropylene-based resin film and a reinforcing resin layer laminated on the polypropylene-based resin film as a base material and that is provided with press-through functionality by causing degradation of the polypropylene-based resin film through irradiation with radiation.

Moreover, PTL 2 and 3 disclose a lid material for PTP that has a sheet formed of a resin composition containing a polypropylene-based resin and an inorganic material (talc, etc.) for improving outward penetrability as a base material.

PTL 4 discloses a sheet for a lid material of a blister package body obtained through crystallization by heat treatment that has high ease of incineration enabling treatment under the same conditions as a bottom material and that has a crystalline thermoplastic resin as an essential component so as to achieve excellent tensile breaking load, elongation, and ease of puncturing.

PTL 5 discloses a laminate polypropylene-based film in which a resin having an enthalpy of crystal fusion that is within a certain range is laminated in an interlayer portion in order to improve adhesive strength between layers in addition to ease of severing by hand, mechanical strength, and so forth.

PTL 6 discloses a lid material film for PTP made of plastic in which a styrene-based resin and an inorganic filler are used in order to facilitate waste treatment after use and improve press-through capability and print legibility, and also discloses a PTP body in which this lid material film is used.

CITATION LIST

Patent Literature

PTL 1: JP H7-256842 A
PTL 2: JP H10-101133 A
PTL 3: JP H9-11422 A
PTL 4: JP 2000-7026 A
PTL 5: JP 2000-25173 A
PTL 6: JP 2013-234002 A

SUMMARY

(Technical Problem)

However, the lid material described in PTL 1 suffers from a problem that cross-linking of the reinforcing resin layer that occurs during irradiation with radiation in order to cause degradation of the polypropylene-based resin film negatively affects outward penetrability, and also suffers from a problem that unpleasant odor released during degradation of the polypropylene-based resin film may remain.

Moreover, the lid materials described in PTL 2 and 3 each have room for further improvement in terms of ease of recognition of opening through an opening sound generated when the lid material is punctured to take out contained matter.

The lid material described in PTL 4 has room for improvement in terms of ease of opening recognition mentioned above and also suffers from a problem of being unsuitable for material recycling because different resins such as polystyrene, saponified ethylene-vinyl acetate copolymer, and nylon 6 are laminated.

The lid material described in PTL 5 suffers from a problem of poor outward penetrability and ease of opening recognition due to biaxially oriented polypropylene-based resin being laminated.

The lid material described in PTL 6 is unsuitable for recycling due to a styrene-based resin being used and also suffers from a problem of release of unpleasant odor in high-temperature environments as a result of application of an emulsion-type heat sealant.

Accordingly, an object of the present disclosure is to provide a lid material for a PTP body and a PTP body that have excellent outward penetrability and ease of opening recognition and that suppress unpleasant odor.

(Solution to Problem)

As a result of diligent investigation conducted with the aim of solving the problems set forth above, the inventors discovered that the problems set forth above can be solved by adopting a lid material for PTP that contains a polypropylene-based resin having a molecular weight within a specific range and that has an enthalpy of crystal fusion within a specific range, and, in this manner, completed the present disclosure.

Specifically, the present disclosure provides the following.

[1] A lid material for PTP comprising a polypropylene-based resin having a weight-average molecular weight of $2.0 \times 10^5$ to $3.5 \times 10^5$, wherein the lid material for PTP has an enthalpy of crystal fusion of 70 J/g or more as measured by a differential scanning calorimeter (DSC).

[2] The lid material for PTP according to [1], having an MD degree of orientation of -0.035 to 0.035.

[3] The lid material for PTP according to [1] or [2], wherein on a load-displacement curve for the lid material for PTP in a puncture test, maximum load reduction per 0.1 mm of displacement in a breaking region is 3 N to 20 N.

[4] The lid material for PTP according to any one of [1] to [3], having a thickness of 10 $\mu$m to 100 $\mu$m, a water vapor permeability of 10 g/m²·day or less, a tensile strength of 20 MPa to 50 MPa for both MD and TD, and a tensile elongation of 15% or less for both MD and TD.

[5] The lid material for PTP according to any one of [1] to [4], comprising 0.1 mass% to 3 mass% of an inorganic material.

[6] The lid material for PTP according to any one of [1] to [5], comprising: a layer containing the polypropylene-based resin; and at least one surface layer containing a polyethylene-based resin, a polypropylene-based resin, or a polyolefin-based elastomer.

[7] A PTP body comprising: the lid material for PTP according to any one of [1] to [6]; and a bottom material having a cavity that accommodates contained matter.

(Advantageous Effect)

According to the present disclosure, it is possible to provide a lid material for a PTP body and a PTP body that have excellent outward penetrability and ease of opening recognition and that suppress unpleasant odor.

BRIEF DESCRIPTION OF THE DRAWINGS

In the accompanying drawings:

FIG. 1 is a cross-sectional view illustrating an embodiment of a PTP body including a lid material for PTP according to the present disclosure; and
FIG. 2 is a graph illustrating an example of a load-displacement curve that is obtained when a puncture test is performed with respect to a lid material for PTP according to the present disclosure.

DETAILED DESCRIPTION

The following provides a detailed description of an embodiment of the present disclosure (hereinafter, referred to as the "present embodiment"). However, the present disclosure is not limited by the following description, and may be implemented with various modifications that do not deviate from the essence thereof.

<Lid material for PTP>

Features of a lid material for PTP (hereinafter, also referred to simply as a "lid material") of the present embodiment are that the lid material contains a polypropylene-based resin having a weight-average molecular weight of $2.0 \times 10^5$ to $3.5 \times 10^5$ and that the lid material has an enthalpy of crystal fusion of 70 J/g or more as measured by a differential scanning calorimeter (DSC).

{Polypropylene-based resin}

The polypropylene-based resin that is contained in the lid material for PTP of the present embodiment is not specifically limited so long as it has a weight-average molecular weight of $2.0 \times 10^5$ to $3.5 \times 10^5$ and may be a propylene homopolymer, a copolymer of propylene and another monomer, a modified product of either thereof, or the like, for example. Moreover, biopolypropylene may be used as the polypropylene-based resin from a viewpoint of environmental friendliness. Of these examples, a propylene homopolymer is preferable from a viewpoint of heat resistance, water vapor barrier performance, and tensile elongation.

One type of polypropylene-based resin may be used individually, or two or more types of polypropylene-based resins may be used in combination.

Examples of monomers that can be copolymerized with propylene include $\alpha$-olefins such as ethylene, 1-butene, isobutylene, 1-pentene, and 1-hexene. No specific limitations are placed on the form of polymerization, and the polypropylene-based resin may be a random copolymer, a block copolymer, or the like.

The production method of the polypropylene-based resin is not specifically limited and may be a commonly known method such as a method in which propylene and any other used monomers are polymerized in the presence of a catalyst. More specifically, a method in which propylene and any other used monomers are polymerized at a polymerization temperature within a range of 0°C to 100°C and a polymerization pressure within a range of 3 atm to 100 atm in the presence of a catalyst and an alkylaluminum compound may be adopted, for example.

The catalyst may be a titanium trichloride catalyst, a titanium halide catalyst mounted on a support such as magnesium chloride, or the like. A chain transfer agent such as hydrogen may be added in order to adjust the molecular weight of the polymer.

In addition to the above-described catalyst, an electron donor compound serving as an internal donor component or an external donor component may be used as a third component in production of the polypropylene-based resin in order to increase isotacticity of polypropylene and polymerization activity. Commonly known compounds can be used as the electron donor compound without any specific limitations. Examples thereof include ester compounds such as $\varepsilon$-caprolactone, methyl methacrylate, ethyl benzoate, and methyl toluate; phosphite esters such as triphenyl phosphite and tributyl phosphite; phosphoric acid derivatives such as hexamethylphosphoric triamide; alkoxy ester compounds; aromatic monocarboxylic acid esters; aromatic alkyl alkoxysilanes; aliphatic hydrocarbon alkoxysilanes; various types of ether compounds; various types of alcohols; and various types of phenols.

The polymerization process in the above-described method may be a batch process or a continuous process. The polymerization method may be solution polymerization in a solvent such as butane, pentane, hexane, heptane, or octane, slurry polymerization, bulk polymerization in monomer in the absence of a solvent, gas-phase polymerization in gaseous monomer, or the like.

The polypropylene-based resin may be a modified polypropylene-based resin that is obtained by modifying an unmodified polypropylene-based resin with a modifying agent such as an $\alpha,\beta$-unsaturated carboxylic acid or derivative thereof (inclusive of acid anhydrides and esters). For example, the modified polypropylene-based resin may be a product obtained through grafting or addition of an $\alpha,\beta$-unsaturated carboxylic acid or derivative thereof with respect to an unmodified polypropylene-based resin. More specifically, the modified polypropylene-based resin may be a product obtained through grafting or addition of an $\alpha,\beta$-unsaturated carboxylic acid or derivative thereof with respect to a polypropylene-based resin in a proportion of approximately 0.01 mass% to 10 mass% of the overall polypropylene-based resin.

The modified polypropylene-based resin is obtained by, for example, reacting the unmodified polypropylene-based resin and the modifying agent in a molten state, solution state, or slurry state in a range of 30°C to 350°C while in the presence or absence of a radical precursor.

In a case in which the polypropylene-based resin is a mixture of unmodified polypropylene and modified polypropylene, the mixing ratio of the unmodified polypropylene and the modified polypropylene may be any ratio without any specific limitations.

The weight-average molecular weight of the polypropylene-based resin is $2.0 \times 10^5$ to $3.5 \times 10^5$, preferably $2.2 \times 10^5$ to $3.2 \times 10^5$, and more preferably $2.3 \times 10^5$ to $3.0 \times 10^5$. A polypropylene-based resin having a weight-average molecular weight within any of the ranges set forth above is not normally used in films due to the brittleness thereof. However, this brittleness is exploited in the lid material for PTP of the present embodiment to achieve excellent outward penetrability. Moreover, when a polypropylene-based resin having a weight-average molecular weight within any of the ranges set forth above is used, it is not necessary to perform irradiation with radiation to cause propylene-based resin degradation as in PTL 1. Therefore, it is possible to avoid the release of unpleasant odor caused by resin decomposition during irradiation, reduction of recyclability due to cross-linking of a reinforcing resin layer or the like, and reduction of sealing performance.

Note that the weight-average molecular weight can be measured by gel permeation chromatography (hereinafter, also referred to as "GPC"), and, more specifically, can be measured by a method subsequently described in the EXAMPLES section.

The content of the polypropylene-based resin when the lid material for PTP is taken to be 100 mass% is preferably 60 mass% to 100 mass%, more preferably 70 mass% to 95 mass%, and even more preferably 75 mass% to 90 mass%. When the content of the polypropylene-based resin is within any of the ranges set forth above, it tends to be easier to achieve good outward penetrability. Moreover, particularly in a case in which the content of the polypropylene-based resin is 100 mass%, the lid material has excellent recyclability.

The lid material for PTP of the present embodiment may be a laminate that includes a layer containing the above-described polypropylene-based resin (hereinafter, also referred to as a "low-molecular-weight polypropylene-based resin layer").

Examples of other layers that may be laminated with the low-molecular-weight polypropylene-based resin layer include a seal layer for improving sealing performance with a bottom material for PTP, an adjustment layer for adjusting physical properties of the lid material such as strength and outward penetrability, a reinforcing layer for preventing film severing during packaging, and a barrier layer for improving gas barrier performance.

The number of laminated layers is not specifically limited but is preferably 2 to 5 layers, and more preferably 2 or 3 layers from a viewpoint of balance of strength, outward penetrability, water vapor barrier performance, sealing performance, and recyclability.

The thickness of the low-molecular-weight polypropylene-based resin layer when the thickness of the overall lid material for PTP is taken to be 100% is preferably 60% to 95%, more preferably 70% to 95%, and even more preferably 75% to 90%. When the thickness of the low-molecular-weight polypropylene-based resin layer is within any of the ranges set forth above, it tends to be easier to achieve good outward penetrability and water vapor barrier performance.

In one configuration, the lid material for PTP of the present embodiment may include a layer containing the above-described polypropylene-based resin and at least one surface layer containing a polyethylene-based resin, a polypropylene-based resin, or a polyolefin-based elastomer.

The surface layer may be a surface layer at a bottom material side that is adhered to a bottom material, a surface layer at an outer side (i.e., an outermost layer), or both of these layers. For example, the surface layer may be a surface layer at the outer side that serves as a reinforcing layer for preventing film severing during packaging. Moreover, the inclusion of a polyethylene-based resin, a polypropylene-based resin, or a polyolefin-based elastomer provides excellent heat sealing performance and does not result in the release of unpleasant odor in high-temperature environments because these resins can be coextruded and thus do not require application of an emulsion-type heat sealant. Therefore, such a surface layer is suitable as a surface layer at a bottom material side that is adhered to a bottom material. Of these examples, a layer containing a polyolefin-based elastomer is preferable particularly due to excellent low-temperature sealing performance, and a layer containing a polypropylene-based resin such that the entire lid material for PTP is formed of polypropylene-based resin is preferable from a viewpoint of recyclability.

The thickness of the surface layer when the thickness of the overall lid material for PTP is taken to be 100% is preferably 5% to 40%, more preferably 5% to 30%, and even more preferably 10% to 25%. When the thickness of the surface layer is within any of the ranges set forth above, it is possible to impart good heat sealing performance and prevent film severing without negatively affecting outward penetrability.

The polyethylene-based resin that may be contained in the surface layer is not specifically limited and may be an ethylene homopolymer or a copolymer of ethylene and another monomer. For example, the polyethylene-based resin may be an ethylene homopolymer; an ethylene-$\alpha$-olefin copolymer such as an ethylene-propylene copolymer, an ethylene-butene copolymer, or an ethyleneoctene copolymer; an ethylene-(meth)acrylic acid ester copolymer such as an ethylene-ethyl acrylate copolymer, an ethylene-butyl acrylate copolymer, or an ethylene-ethyl acrylate-methyl methacrylate copolymer; or an ethylene-vinyl acetate copolymer. Of these examples, a low-density ethylene-$\alpha$-olefin copolymer is preferable in terms that low-temperature sealing performance tends to improve with lower density. Moreover, bio-polyethylene may be used as the polyethylene-based resin from a viewpoint of environmental friendliness. One type of polyethylene-based resin may be used individually, or two or more types of polyethylene-based resins may be used in combination.

The production method of the polyethylene-based resin is not specifically limited and may be through polymerization using a commonly known catalyst such as a single-site catalyst or a multi-site catalyst.

The content of the polyethylene-based resin when the lid material for PTP is taken to be 100 mass% is preferably 5 mass% to 40 mass%, more preferably 5 mass% to 30 mass%, and even more preferably 10 mass% to 25 mass%.

When the content of the polyethylene-based resin is within any of the ranges set forth above, it is possible to impart good heat sealing performance and prevent film severing without negatively affecting outward penetrability.

The polypropylene-based resin that may be contained in the surface layer may be any of the same types as for the previously described low-molecular-weight polypropylene-based resin. In particular, a low-density propylene-$\alpha$-olefin copolymer is preferable from a viewpoint of having excellent low-temperature sealing performance.

The molecular weight of the polypropylene-based resin is not specifically limited but is preferably higher than that of the polypropylene-based resin that is contained in the previously described low-molecular-weight polypropylene-based resin layer. For example, the polypropylene-based resin may be a resin having a melt flow rate (MFR; measured in accordance with ASTM D-1238 at 230°C with load of 2.16 kgf) of 3 g/10 min to 15 g/10 min.

One type of polypropylene-based resin may be used individually, or two or more types of polypropylene-based resins may be used in combination.

The polyolefin-based elastomer is an amorphous or low crystallinity olefin-based polymer having a crystallinity of 50% or less. The monomer (olefin) of the polyolefin-based elastomer may be an $\alpha$-olefin such as ethylene, propylene, 1-butene, isobutylene, 1-pentene, 1-hexene, 4-methyl-1-pentene, 3-methyl-1-butene, 2-methyl-1-butene, 1-hexene, 1-octene, 1-decene, or 1-dodecene, or a cycloolefin such as cyclobutene, cyclopentene, or cyclohexene.

Of these examples, a low-melting-point (55°C to 90°C) polypropylene-based elastomer is preferable in terms of having excellent low-temperature sealing performance. Moreover, a bio-polyolefin-based elastomer may be used as the polyolefin-based elastomer from a viewpoint of environmental friendliness. One type of polyolefin-based elastomer may be used individually, or two or more types of polyolefin-based elastomers may be used in combination.

The production method of the polyolefin-based elastomer is not specifically limited and may be through polymerization using a commonly known catalyst such as a single-site catalyst or a multi-site catalyst.

The content of the polyolefin-based elastomer when the lid material for PTP is taken to be 100 mass% is preferably 5 mass% to 40 mass%, more preferably 5 mass% to 30 mass%, and even more preferably 10 mass% to 25 mass%. When the content of the polyolefin-based elastomer is within any of the ranges set forth above, it is possible to impart good heat sealing performance and prevent film severing without negatively affecting outward penetrability.

In another configuration, the lid material for PTP of the present embodiment may include an adjustment layer for adjusting physical properties of the lid material such as strength and outward penetrability in-between the low-molecular-weight polypropylene-based resin layer and the surface layer described above.

The thickness of the adjustment layer when the thickness of the overall lid material for PTP is taken to be 100% is preferably 10% to 40%, more preferably 15% to 35%, and even more preferably 20% to 30%.

It is preferable that a polypropylene-based resin is used in the adjustment layer from a viewpoint of recyclability.

The type of polypropylene-based resin may be any of the same types as for the previously described low-molecular-weight polypropylene-based resin.

The molecular weight of the polypropylene-based resin is not specifically limited but is preferably higher than that of the polypropylene-based resin contained in the previously described low-molecular-weight polypropylene-based resin layer. For example, the polypropylene-based resin may be a resin having a melt flow rate (MFR; measured in accordance with ASTM D-1238 at 230°C with load of 2.16 kgf) of 3 g/10 min to 15 g/10 min.

One type of polypropylene-based resin may be used individually, or two or more types of polypropylene-based resins may be used in combination.

{Inorganic material}

The lid material for PTP of the present embodiment may contain an inorganic material in order to increase breaking start points and improve outward penetrability.

The inorganic material is not specifically limited and may be amorphous alumina silicate, silica, alumina, talc, kaolin, mica, wollastonite, clay, calcium carbonate, glass fiber, aluminum sulfate, or the like, for example.

The content of the inorganic material when the lid material for PTP is taken to be 100 mass% is preferably 0.1 mass% to 3 mass%, more preferably 0.3 mass% to 2 mass%, and even more preferably 0.5 mass% to 1 mass%. When the content of the inorganic material is within any of the ranges set forth above, the lid material displays good outward penetrability, has few impurities, and has high recyclability.

The lid material for PTP of the present embodiment may contain additives that are typically used in the relevant field, examples of which include metal soaps for assisting dispersion of the above-described inorganic material, colorants, plasticizers, antioxidants, heat stabilizers, ultraviolet absorbers, lubricants, antistatic agents, and crystal nucleating agents.

Moreover, the lid material for PTP of the present embodiment may be subjected to treatment such as corona treatment, plasma treatment, ultraviolet treatment, or AC (anchor coat) treatment with the aim of improving printing characteristics.

In particular, a white colorant or printing is preferable for the following reason. In recent years, there has been increasing need for printing a barcode including various information such as a product code, expiry date, serial number, quantity, and the like on a PTP body for medicine, in addition to a conventional pattern showing the product name logo or method of use, in order to prevent medical errors and ensure traceability. By using a lid material film formed by compounding a white colorant or by printing with white color, it is easier to read a barcode because parts where a barcode line is not present (i.e., parts where the lid material is directly visible) are white, thus enabling color shading with parts where a barcode line is present (generally black).

The content of additives when the lid material for PTP is taken to be 100 mass% is preferably 3 mass% or less.

The thickness of the lid material for PTP of the present embodiment is preferably 10 $\mu$m to 100 $\mu$m, more preferably 30 $\mu$m to 80 $\mu$m, and even more preferably 40 $\mu$m to 60 $\mu$m. A thickness of 10 $\mu$m or more makes it easier to achieve tensile strength that can withstand processing steps and water vapor barrier performance, whereas a thickness of 100 $\mu$m or less makes it easier to achieve good outward penetrability.

The water vapor permeability of the lid material for PTP of the present embodiment is preferably 10 $g/m^2 \cdot day$ or less, more preferably 8 $g/m^2 \cdot day$ or less, and even more preferably 5 $g/m^2 \cdot day$ or less. A water vapor permeability that is within any of the ranges set forth above can inhibit denaturing of contained matter such as medicine by water vapor and enables long-term storage.

The water vapor permeability of the lid material for PTP can be adjusted through the thickness of the lid material for PTP, selection of the type of resin, the presence or absence of a barrier layer, and so forth, for example. Increasing the thickness of the lid material for PTP or providing a barrier layer tends to reduce water vapor permeability. The barrier layer may be a resin layer of an ethylene-vinyl alcohol copolymer, a cycloolefin, or the like or may be an inorganic vapor deposition layer of aluminum, aluminum oxide, silicon oxide, or the like. The water vapor permeability of the lid material for PTP can also be reduced by using a resin having a high crystallinity.

Note that the water vapor permeability is measured in accordance with JIS K7129 and is a converted value for a thickness of 40 $\mu$m. More specifically, the water vapor permeability can be determined by a method subsequently described in the EXAMPLES section.

The MD tensile strength of the lid material for PTP of the present embodiment is preferably 20 MPa to 50 MPa, more preferably 20 MPa to 45 MPa, and even more preferably 25 MPa to 35 MPa. When the MD tensile strength is 20 MPa or more, it is possible to prevent film severing during processing steps. Moreover, when the MD tensile strength is 50 MPa or less, it is possible to obtain a lid material for PTP having good outward penetrability.

Examples of methods by which the MD tensile strength of the lid material for PTP may be controlled include changing the crystallinity of resin and performing drawing. The MD tensile strength tends to increase when the crystallinity is increased and when drawing is performed.

The TD tensile strength of the lid material for PTP of the present embodiment is preferably 20 MPa to 50 MPa, more preferably 20 MPa to 45 MPa, and even more preferably 25 MPa to 35 MPa. When the TD tensile strength is 20 MPa or more, it is possible to prevent film severing during processing steps. Moreover, when the TD tensile strength is 50 MPa or less, it is possible to obtain a lid material for PTP having good outward penetrability.

Examples of methods by which the TD tensile strength of the lid material for PTP may be controlled include changing the crystallinity of resin and performing drawing. The MD tensile strength tends to increase when the crystallinity is increased and when drawing is performed.

Note that the MD and TD tensile strength can be measured in accordance with JIS K7127, and, more specifically, can be measured by a method subsequently described in the EXAMPLES section.

The MD tensile elongation of the lid material for PTP of the present embodiment is preferably 15% or less, more preferably 11% or less, and even more preferably 9% or less. When the MD tensile elongation is within any of the ranges set forth above, outward penetrability in the TD direction tends to be better (rupturing of the lid material in a state in which a crack forms in the TD more readily occurs).

Examples of methods by which the MD tensile elongation of the lid material for PTP may be controlled include adjustment of the crystallinity, MD degree of orientation, breaking start points, brittleness, breaking strength, and so forth of the lid material for PTP. The MD tensile elongation may be reduced by increasing the crystallinity of the lid material for PTP, reducing the MD degree of orientation, increasing breaking start points through addition of an inorganic material or the like, increasing brittleness by, for example, increasing the ratio of a brittle layer such as the previously described low-molecular-weight polypropylene-based resin layer, or reducing breaking strength by, for example, increasing the flexibility of a brittle layer.

The TD tensile elongation of the lid material for PTP of the present embodiment is preferably 15% or less, more preferably 11% or less, and even more preferably 9% or less. When the TD tensile elongation is within any of the ranges set forth above, outward penetrability in the MD tends to be better (rupturing of the lid material in a state in which a crack forms in the MD more readily occurs).

Examples of methods by which the TD tensile elongation of the lid material for PTP may be controlled include adjustment of the crystallinity, TD degree of orientation, breaking start points, brittleness, breaking strength, and so forth of the lid material for PTP. The TD tensile elongation may be reduced by increasing the crystallinity of the lid material for PTP, reducing the TD degree of orientation, increasing breaking start points through addition of an inorganic material or the like, increasing brittleness by, for example, increasing the ratio of a brittle layer such as the previously described low-molecular-weight polypropylene-based resin layer, or reducing breaking strength by, for example, increasing the flexibility of a brittle layer.

Note that the MD and TD tensile elongation can be measured in accordance with JIS K7127, and, more specifically, can be measured by a method subsequently described in the EXAMPLES section.

The MD tensile modulus of elasticity of the lid material for PTP of the present embodiment is preferably 300 MPa to 1,500 MPa, more preferably 400 MPa to 1,400 MPa, and even more preferably 600 MPa to 1,200 MPa. When the MD tensile modulus of elasticity is 300 MPa or more, it is possible to inhibit film stretching when printing is performed on the lid material for PTP, and thus prevent printing misalignment. Moreover, when the MD tensile modulus of elasticity is 1,500 MPa or less, it is possible to inhibit hardening of the lid material for PTP and to prevent cracking during processing.

Examples of methods by which the MD tensile modulus of elasticity of the lid material for PTP may be controlled include adjustment of the crystallinity and the MD degree of orientation of the lid material for PTP. Reducing the crystallinity or the MD degree of orientation tends to reduce the MD tensile modulus of elasticity.

The TD tensile modulus of elasticity of the lid material for PTP of the present embodiment is preferably 1,500 MPa or less, more preferably 1,400 MPa or less, and even more preferably 1,200 MPa or less. When the TD tensile modulus of elasticity is 1,500 MPa or less, it is possible to inhibit hardening of the lid material for PTP and prevent cracking during processing.

Examples of methods by which the TD tensile modulus of elasticity of the lid material for PTP may be controlled include adjustment of the crystallinity and the MD degree of orientation of the lid material for PTP. Reducing the crystallinity or the MD degree of orientation tends to reduce the TD tensile modulus of elasticity.

Note that the MD and TD tensile modulus of elasticity can be measured in accordance with JIS K7127, and, more specifically, can be measured by a method subsequently described in the EXAMPLES section.

The enthalpy of crystal fusion of the lid material for PTP of the present embodiment as measured by a differential scanning calorimeter (DSC) is 70 J/g or more, preferably 75 J/g to 200 J/g, and more preferably 80 J/g to 200 J/g. An enthalpy of crystal fusion that is within any of the ranges set forth above tends to result in suitable MD and TD tensile elongation and puncture elongation and the display of good outward penetrability.

Examples of methods by which the enthalpy of crystal fusion of the lid material for PTP may be controlled include adjustment of cooling of the lid material for PTP during production of the lid material, annealing after production, addition of a crystal nucleating agent, and so forth. For example, the enthalpy of crystal fusion can be increased by performing cooling as slow cooling when the lid material for PTP is produced by direct inflation, by performing annealing of the lid material after production, by adding a crystal nucleating agent, or the like.

Measurement of the enthalpy of crystal fusion by a differential scanning calorimeter (DSC) can, more specifically, be performed by a method subsequently described in the EXAMPLES section.

The crystallinity of the lid material for PTP of the present embodiment as measured by a Fourier-transform infrared spectrophotometer (FT-IR) is preferably 46% or more, more preferably 47% or more, and even more preferably more than 48%. A crystallinity that is within any of the ranges set forth above results in suitable MD and TD tensile elongation and puncture elongation and the display of good outward penetrability.

Examples of methods by which the crystallinity of the lid material for PTP may be controlled include adjustment of cooling of the lid material for PTP during production of the lid material, annealing after production, addition of a crystal nucleating agent, and so forth. For example, the crystallinity can be increased by performing cooling of the lid material for PTP by airing as slow cooling when the lid material is produced by direct inflation, by performing annealing of the lid material after production, by adding a crystal nucleating agent, or the like.

Measurement of the crystallinity by an FT-IR can, more specifically, be performed by a method subsequently described in the EXAMPLES section. The crystallinity can also be measured in the same manner using a Raman spectrophotometer.

The MD degree of orientation of the lid material for PTP of the present embodiment is preferably -0.035 to 0.035, more preferably -0.03 to 0.03, and even more preferably -0.02 to 0.02. When the MD degree of orientation is within any of the ranges set forth above, it is easier for the MD tensile elongation and the TD tensile elongation to be within suitable ranges, and thus the lid material has an excellent balance of MD and TD tensile elongation and displays good outward penetrability.

Examples of methods by which the MD degree of orientation of the lid material for PTP may be controlled include adjustment of cooling of the lid material for PTP during production of the lid material, the ratio (BUR) and timing of TD drawing, and so forth. For example, the MD degree of orientation can be reduced by performing cooling of the lid material for PTP by airing as slow cooling when the lid material is produced by direct inflation, increasing the TD draw ratio (BUR), performing production by sequential biaxial drawing, or the like.

Note that the MD degree of orientation can be measured by an FT-IR, and, more specifically, can be measured by a method subsequently described in the EXAMPLES section.

Moreover, since the MD degree of orientation indicates orientation in MD relative to TD, the MD degree of orientation may be calculated from measurement results for orientation in MD relative to a thickness direction of the lid material for PTP and orientation in TD relative to the thickness direction. Note that in a case in which the lid material for PTP has a multilayer structure, the degree of orientation should be measured for a thickest layer (or for any one of a plurality of thickest layers) because the thickest layer has a greater influence on characteristics of the PTP lid material.

The MD degree of orientation can be measured using a Raman spectrophotometer in the same manner as when an FT-IR is used.

On a load-displacement curve for the lid material for PTP in a puncture test, the maximum load reduction per 0.1 mm of displacement in a breaking region is preferably 3 N to 20 N, more preferably 4 N to 18 N, and even more preferably 5 N to 15 N. When the maximum load reduction per 0.1 mm of displacement exceeds 20 N, this indicates that the lid material for PTP is not easily ruptured when removing contained matter such as a tablet from a PTP body, and thus tends to have poor outward penetrability. Moreover, the maximum load reduction per 0.1 mm of displacement is one of the most influential factors in ease of opening recognition, and in a situation in which the maximum load reduction per 0.1 mm of displacement is less than 3 N, this indicates that the lid material for PTP is fragile, and thus ease of opening recognition tends to be poor because there is almost no opening sound when contained matter such as a tablet is removed.

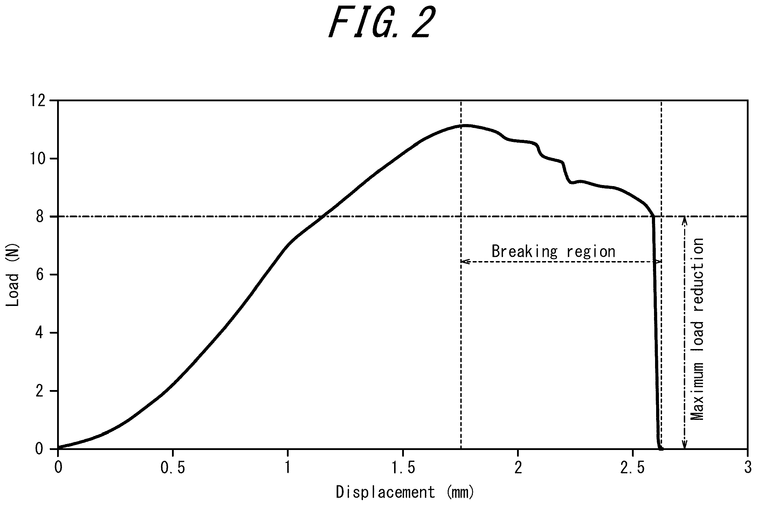

FIG. 2 illustrates an example of a load-displacement curve that is obtained when a puncture test is performed with respect to the lid material for PTP of the present embodiment. In the case of the lid material for PTP in FIG. 2, the maximum load reduction per 0.1 mm of displacement is 8 N.

Examples of methods by which the maximum load reduction per 0.1 mm of displacement of the lid material for PTP may be controlled include adjustment of the weight-average molecular weight of the polypropylene-based resin, the thickness of the lid material for PTP, and a reinforcing layer. For example, the maximum load reduction per 0.1 mm of displacement can be increased by increasing the weight-average molecular weight of the polypropylene-based resin or the thickness of the PTP lid material or by providing a reinforcing layer.

Note that the maximum load reduction per 0.1 mm of displacement in a breaking region of a load-displacement curve can, more specifically, be measured by a method subsequently described in the EXAMPLES section.

The puncture strength of the lid material for PTP of the present embodiment is preferably 6 N to 15 N, more preferably 7 N to 13 N, and even more preferably 8 N to 10 N. A puncture strength of 6 N or more can prevent rupturing of the lid material for PTP by external force during transport, etc. of a PTP body. Moreover, a puncture strength of 15 N or less makes it possible to obtain a lid material for PTP having excellent outward penetrability.

Examples of methods by which the puncture strength of the lid material for PTP may be controlled include adjustment of the weight-average molecular weight of the polypropylene-based resin, the thickness of the lid material for PTP, and a reinforcing layer. For example, the puncture strength tends to increase when the weight-average molecular weight of the polypropylene-based resin or the thickness of the PTP lid material is increased or when a reinforcing layer is provided.

Note that the puncture strength is a converted value for a thickness of 40 $\mu$m and can, more specifically, be measured by a method subsequently described in the EXAMPLES section.

The puncture elongation of the lid material for PTP of the present embodiment is preferably 1 mm to 4 mm, more preferably 1.2 mm to 3 mm, and even more preferably 1.5 mm to 2.5 mm. A puncture elongation of 1 mm or more can prevent rupturing of the lid material for PTP by external force during transport, etc. of a PTP body. Moreover, puncture elongation is one of the most influential factors for outward penetrability in the same manner as tensile elongation, puncture strength, and the like, and a puncture elongation of 4 mm or less makes it possible to obtain a lid material for PTP having excellent outward penetrability.

Examples of methods by which the puncture elongation of the lid material for PTP may be controlled include adjustment of the weight-average molecular weight of the polypropylene-based resin, the ratio of layers in the lid material for PTP, the crystallinity, the MD and TD degree of orientation, and so forth. For example, the puncture elongation tends to be reduced by reducing the weight-average molecular weight of the polypropylene-based resin, increasing the proportion of low-molecular-weight polypropylene-based resin, increasing the crystallinity, or reducing the MD and TD degree of orientation.

Note that the puncture elongation can, more specifically, be measured by a method subsequently described in the EXAMPLES section.

<Production method of lid material for PTP>

Although no specific limitations are placed on the production method of the lid material for PTP, one example thereof is a direct inflation method in which the constituent materials described above are extruded in a tube shape using a commonly known melt extruder that includes an annular die, and then air is directly blown inside thereof to cause drawing. In a case in which the lid material for PTP is a laminate including a plurality of layers, coextrusion direct inflation is preferable.

The following outlines a method of producing a lid material for PTP that is a laminate by coextrusion direct inflation.

A resin or resin composition that is a constituent material of each layer is melted at equal to or higher than the melting point of the resin, and then the layers are each extruded simultaneously using a number of extruders that corresponds to the number of layers. The resin or resin composition of each extruded layer is fed to an annular die through a feed pipe, and a tube-shaped film in which each layer is laminated is produced through the annular die. Next, air (air, nitrogen, etc.) is blown inside of the film to form a bubble and cause MD and TD drawing of the film, thereby producing a lid material for PTP.

The MD draw ratio (DDR) of the film is preferably ×8 to ×23, and more preferably ×10 to ×20. A MD draw ratio of ×8 or more tends to suppress bubble pulses and stabilize drawing. Moreover, an MD draw ratio of ×23 or less results in a lid material that has a suitable MD degree of orientation, an excellent balance of MD and TD degree of orientation, and displays good outward penetrability.

The TD draw ratio (BUR) of the film is preferably × 1.3 to ×4, and more preferably ×1.5 to ×2.5. A TD draw ratio of ×1.3 or more results in a lid material that has a suitable MD degree of orientation, an excellent balance of MD and TD degree of orientation, and displays good outward penetrability. Moreover, a TD draw ratio of ×4 or less tends to suppress bubble pulses and stabilize drawing.

Note that the MD draw ratio can be adjusted through the speed of pinch rolls, whereas the TD draw ratio can be adjusted through the volume of air that is blown inside of the film.

The draw temperature of the film is preferably 70°C to 160°C, and more preferably 80°C to 120°C. A draw temperature of 70°C or higher makes it easier for the crystallinity of the lid material to be within a suitable range and results in a lid material that has an excellent balance of MD and TD degree of orientation and that displays good outward penetrability. Moreover, a draw temperature of 160°C or lower tends to stabilize drawing.

Note that the draw temperature is the temperature of the film surface at a section separated 32 cm perpendicularly downstream in the production process from the discharge surface of the annular die as actually measured by a contactless thermometer. Also note that the draw temperature can be adjusted through the air speed in airing for cooling molten resin, the discharged amount of molten resin, the DDR, and so forth.

<PTP body>

A feature of a PTP body of the present embodiment is that it includes the lid material for PTP of the present embodiment set forth above and a bottom material having a cavity that accommodates contained matter.

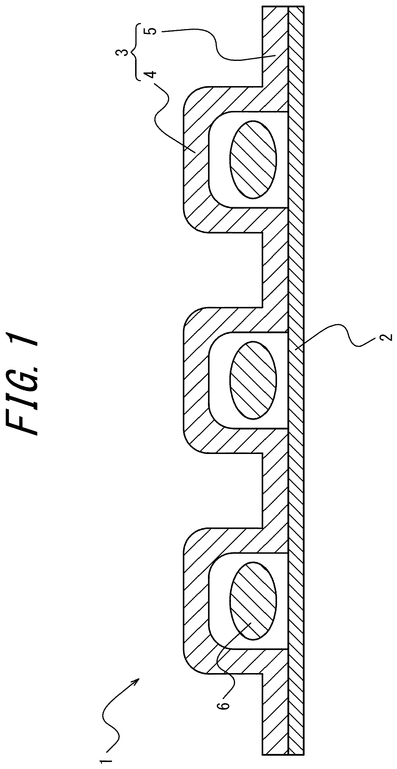

FIG. 1 is a cross-sectional view illustrating an example of a PTP body including the lid material for PTP of the present embodiment. The PTP body 1 includes a lid material 2 for PTP and a bottom material 3. The bottom material 3 includes pocket-shaped cavities 4 and a flange portion 5 that is affixed to the lid material 2. The cavities 4 are loaded with contained matter 6.

{Bottom material}

The bottom material that is a constituent of the PTP body of the present embodiment may, for example, be a sheet material that contains a known synthetic resin such as a polyvinyl chloride-based resin, polyvinylidene chloride-based resin, polyolefin-based resin (for example, a polyethylene-based resin, polypropylene-based resin, ethylene-vinyl alcohol copolymer resin, or cycloolefin resin), polychlorotrifluoroethylene, or polyester, and is preferably a sheet material formed of any of these synthetic resins. In particular, it is preferable that the bottom material contains a polyethylene-based resin, a polypropylene-based resin, or a cycloolefin resin, and most preferable that the bottom material contains a polypropylene-based resin in the same manner as the lid material for PTP from a viewpoint of recyclability.

The thermal deformation temperature of the bottom material according to JIS K7191 is preferably 50°C to 160°C, and more preferably 80°C to 120°C from a viewpoint of enabling a wide range of forming conditions for vacuum or pressure forming of the pocket-shaped cavities of the bottom material.

No specific limitations are placed on the shape of the bottom material so long as it has a cavity that accommodates contained matter. A bottom surface and an opening of the cavity may be an angular shape (square, rectangle, triangle, etc.) or a circular shape (circle, ellipse, etc.), and may be an angular shape with rounded corners.

The size of the bottom material may be set as appropriate depending on the size, number, etc. of the contained matter without any specific limitations. For example, the cavity depth may be 1 mm to 15 mm, and preferably 2 mm to 10 mm. Moreover, particularly in a case in which the opening and the bottom surface of each cavity have circular shapes, the diameter of each opening may be 5 mm to 150 mm, and preferably 10 mm to 100 mm, and the diameter of each bottom surface may be 5% to 20% smaller than the diameter of each opening, for example.

The flange portion that is a portion other than the cavities is not specifically limited and may be provided such as to extend orthogonally to the depth direction of the cavities.

The average width of the flange portion may, for example, be 2 mm to 100 mm, and preferably 4 mm to 50 mm.

The thickness of the bottom material 1 is not specifically limited and may, for example, be 100 $\mu$m to 500 $\mu$m, and preferably 150 $\mu$m to 300 $\mu$m.

<Production method of PTP body>

The PTP body of the present embodiment can be produced by overlapping a surface (flange portion) of the bottom material and a surface of the lid material and performing heat sealing.

The heat sealing temperature may be 100°C to 160°C, for example, and is preferably 100°C to 140°C from a viewpoint that the formation of burn marks on the contained matter is unlikely to occur. The heat sealing time may be 0.05 seconds to 3 seconds, for example, and is preferably 0.2 seconds to 1 second from a viewpoint that the formation of burn marks on the contained matter is unlikely to occur and a viewpoint of obtaining sufficient sealing strength. The heat sealing pressure may be 0.2 MPa to 0.6 MPa, for example, and is preferably 0.3 MPa to 0.5 MPa from a viewpoint that the formation of burn marks on the contained matter is unlikely to occur and a viewpoint of obtaining sufficient sealing strength.

A forming machine that is used for forming the PTP body in the present embodiment may, for example, be a roll seal forming machine that performs heat sealing by sandwiching the lid material and the bottom material between a heat-seal roll and an under-seal roll or a flat seal forming machine that has flat-plate heating molds at the top and bottom and that sandwiches the lid material and the bottom material between the molds to perform forming. Of these examples, a flat seal forming machine is preferable since it is easy to obtain sufficient sealing strength.

EXAMPLES

The following describes the present embodiment through specific examples and comparative examples. However, the present embodiment is not limited to these examples.

Materials used in the examples and comparative examples were as follows.

{Polypropylene-based resin (PP)}

- PP1: Polypropylene (PLB00A produced by SunAllomer Ltd.; weight-average molecular weight: $2.2 \times 10^5$)
- PP2: Polypropylene (PLA00A produced by SunAllomer Ltd.; weight-average molecular weight: $2.6 \times 10^5$)
- PP3: Polypropylene (VS700A produced by SunAllomer Ltd.; weight-average molecular weight: $3.8 \times 10^5$)
- PP4: Polypropylene (PL500A produced by SunAllomer Ltd.; weight-average molecular weight: $6.0 \times 10^5$)

{Polyethylene-based resin (PE)}

- Polyethylene (UMERIT 0520F produced by Ube-Maruzen Polyethylene Co., Ltd.)

{Polyolefin-based elastomer (TPO)}

- Propylene-$\alpha$-olefin copolymer (TAFMER XM7070 produced by Mitsui Chemicals, Inc.)

{Saponified ethylene-vinyl acetate copolymer (EVOH)}

- Saponified ethylene-vinyl acetate copolymer (Soarnol DC3203 produced by Mitsubishi Chemical Corporation)

{Adhesive resin}

- Acid-modified polyolefin composition (ADMER NF587 produced by Mitsui Chemicals, Inc.)

{Polystyrene resin (PS)}

- Polystyrene (PSJ-POLYSTYRENE G9305 produced by PS Japan Corporation)

{Inorganic material}

- Amorphous aluminosilicate (SILTON JC-30 produced by Mizusawa Industrial Chemicals, Ltd.)

{Bottom material}

· PP

A polypropylene single-layer sheet (Sumilite NS-3450 (thickness: 300 $\mu$m) produced by Sumitomo Bakelite Co., Ltd.) was shaped into a bottom material including cavities that each had a depth of 4 mm, a circular opening of 10 mm in diameter, and a circular bottom surface of 8 mm in diameter and also including a flange portion that extended orthogonally to the depth direction with an average width of 10 mm. The openings were arranged in lengthwise and widthwise columns orthogonal to one another, and the distance between centers of the openings was set as 20 mm in both the lengthwise and widthwise directions.

• PP/PE

A multilayer sheet of 300 $\mu$m in thickness that had polypropylene (PL500A produced by SunAllomer Ltd.), polypropylene (PC540R produced by SunAllomer Ltd.), and polyethylene (UMERIT 0520F produced by Ube-Maruzen Polyethylene Co., Ltd.) laminated in this order was produced by coextrusion direct inflation. The polyethylene side of this multilayer sheet was taken to be a heat sealing surface, and the multilayer sheet was shaped in the same manner as the polypropylene single-layer sheet described above.

• PVC

A polyvinyl chloride single-layer sheet (Sumilite VSS-F110 (thickness: 250 $\mu$m) produced by Sumitomo Bakelite Co., Ltd.) was shaped in the same manner as the polypropylene single-layer sheet described above.
The following describes measurement and evaluation methods used in the examples and comparative examples.

(1) Weight-average molecular weight

The weight-average molecular weight of a polypropylene-based resin used in a lid material for PTP in each example or comparative example was measured by the following procedure.
First, 1,2,4-trichlorobenzene was added to a sample such as to adjust the concentration thereof to 1 mg/mL. The sample was left at rest at 160°C for 30 minutes and was subsequently shaken at 160°C for 1 hour to cause dissolution. The resultant solution was filtered using a 0.5 $\mu$m PTFE filter, and then the polystyrene-equivalent weight-average molecular weight was measured by a GPC (PL-GPC220 produced by Agilent Technologies, Inc.). Note that the column used in measurement was two TSK-gel $GMH_{HR}$-H(20)HT (7.8 mm $\times$ 30 cm) columns produced by Tosoh Corporation that were linked, and the column temperature was set as 160°C.

(2) Water vapor permeability

The water vapor permeability of a lid material for PTP obtained in each example or comparative example was measured using a water vapor permeability measurement device (PERMATRAN-W Model 398 produced by MOCON Inc.). The water vapor permeability (g/m$^2$·day) was measured in accordance with JIS K7129 at 38°C and 90%RH and was converted to a value for a thickness of 40 $\mu$m.

(3) Tensile strength, tensile elongation, and tensile modulus of elasticity

With respect to a lid material for PTP obtained in each example or comparative example, tensile strength, tensile elongation, and tensile modulus of elasticity were measured for both MD and TD in accordance with JIS K7127.

A strip-shaped test specimen (150 mm length $\times$ 10 mm width) was cut out from the lid material for PTP. Ends of this test specimen were attached to a universal testing machine (Autograph produced by Shimadzu Corporation) such that the distance between chucks was 50 mm. Movement was performed with a movement speed between chucks of 200 mm/min, the maximum load and maximum elongation required for breaking during this movement were measured, and these measured values were taken to be the tensile strength (MPa) and the tensile elongation (%). Moreover, the load at the time of 2% elongation was taken to be the tensile modulus of elasticity (MPa). Values measured for 10 test specimens were averaged, and the average values were taken to be the tensile strength, tensile elongation, and tensile modulus of elasticity of the lid material for PTP.

(4) Enthalpy of crystal fusion

A sample (5 mg to 10 mg) was cut out from a lid material for PTP obtained in each example or comparative example. The sample was measured using a differential scanning calorimeter (DSC) (DSC7000X produced by Hitachi High-Tech Science Corporation) under a nitrogen atmosphere with indium as a calorimetric standard. The heating program involved heating the sample from 0°C to 200°C at a heating rate of 10°C/min. The enthalpy of crystal fusion (J/g) was determined by taking a straight line extrapolated from a high temperature side as a base line with respect to a heat absorption peak on the obtained heat flow curve that was due to melting. Note that in a case in which a plurality of heat absorption peaks due to melting were present, the total of each enthalpy of crystal fusion was taken to be the enthalpy of crystal fusion of the lid material for PTP.

(5) Crystallinity

The crystallinity (%) was measured for a lid material for PTP obtained in each example or comparative example using a Fourier-transform infrared spectrophotometer (FT/IR4100 produced by JASCO Corporation). In calculation of the crystallinity, the crystallinity was determined by the following formula using the light absorbance at 973 cm$^{-1}$ (peak of crystal and amorphous origin) and at 998 cm$^{-1}$ (peak of crystal origin) for the polypropylene-based resin (hereinafter, "light absorbance" expresses the height of a peak).

$$\text{Crystallinity} = 0.56 \times \text{Light absorbance } (998 \text{ cm}^{-1})/\text{Light absorbance } (973 \text{ cm}^{-1}) \times 100$$

Note that in this measurement, the cumulative number was 16 times, the resolution was 4 cm$^{-1}$, and an average value of values measured for 5 test specimens was taken to be the crystallinity.

(6) MD degree of orientation

The MD degree of orientation was measured for a lid material for PTP obtained in each example or comparative example using a Fourier-transform infrared spectrophotometer (FT/IR4100 produced by JASCO Corporation). Measurement was performed with respect to the lid material for PTP with grid polarizers of 0° (MD) and 90° (TD), and the MD degree of orientation was determined by the following formula using the light absorbance at 973 cm$^{-1}$ for each polypropylene-based resin.

$$\text{Dichroic ratio (R)} = \text{Light absorbance (MD)}/\text{Light absorbance (TD)}$$

$$\text{MD degree of orientation} = (R - 1)/(R + 2) \times 1.17$$

Note that in this measurement, the cumulative number was 16 times, the resolution was 4 cm$^{-1}$, and an average value of values measured for 5 test specimens was taken to be the MD degree of orientation.

(7) Puncture strength and puncture elongation

The puncture strength and puncture elongation of a lid material for PTP obtained in each example or comparative example were measured by the following procedure.

The lid material for PTP was fixed in a taut state on a frame of 10 mm in diameter. A needle of 4 mm in diameter having a plate shaped tip was installed in a universal testing machine (Autograph produced by Shimadzu Corporation) and was pressed into the fixed lid material for PTP so as to perform a puncture test. The measurement was performed in an environment having a temperature of 23°C and a humidity of 50%RH and with a needle movement speed of 50 mm/min. The maximum load acting on the needle when rupturing occurred was taken to be the puncture strength (N) and was converted to a value for a thickness of 40 $\mu$m. In addition, the depth of the position of the tip of the needle when rupturing occurred (i.e., the displacement to the position at which rupturing occurred from contact of the needle with the fixed lid material for PTP) was taken to be the puncture elongation (mm). Values measured for 5 test specimens were averaged, and the average values were taken to be the puncture strength and the puncture elongation of the lid material for PTP.

(8) Maximum load reduction during puncture test breaking

The load reduction during puncture test breaking was measured by the following procedure for a lid material for PTP obtained in each example or comparative example.

The lid material for PTP was fixed in a taut state on a frame of 10 mm in diameter. A needle of 4 mm in diameter having a plate shaped tip was installed in a universal testing machine (Autograph produced by Shimadzu Corporation) and was pressed into the fixed lid material for PTP so as to perform a puncture test. The measurement was performed in an environment having a temperature of 23°C and a humidity of 50%RH and with a needle movement speed of 50 mm/min. A value at which load reduction per 0.1 mm of displacement was at a maximum was determined for a breaking region of the obtained load-displacement curve (i.e., among load reduction accompanying rupturing). Values measured for 5 test specimens were averaged, and the average value was taken to be the maximum load reduction per 0.1 mm of displacement for the lid material for PTP.

(9) Sealing strength

The sealing strength of a lid material for PTP obtained in each example or comparative example was measured by the following procedure.

First, the lid material for PTP and a bottom material were heat sealed using a heat seal tester (produced by Tester Sangyo Co., Ltd.). In this heat sealing, the sealing temperature was 140°C, the sealing time was 2 seconds, and the sealing pressure was 0.25 MPa. Thereafter, a strip-shaped test specimen (40 mm length for each of lid material for PTP and bottom material (total 80 mm) × 15 mm width) was cut out. Ends of this test specimen were attached to a universal testing machine (Autograph produced by Shimadzu Corporation) such that the sealed part was arranged between chucks of the machine and the distance between chucks was 30 mm. Movement was performed with a movement speed between chucks of 200 mm/min so as to perform a 180° peeling test, and the maximum load until the sealed part was completely peeled was taken to be the sealing strength (N/15 mm). Values measured for 10 test specimens were averaged, and the average value was taken to be the sealing strength of the lid material for PTP.

(10) Outward penetrability

The puncture elongation of a lid material for PTP obtained in each example or comparative example and the occurrence or absence of delamination during puncturing of the lid material of a PTP body were taken together in order to evaluate outward penetrability by the following evaluation standard.

[Evaluation standard]

◎ (Excellent): Puncture elongation is less than 2.6 mm, and delamination and partial fracturing do not occur upon puncturing of lid material of PTP body

O (Good): Puncture elongation is not than 2.6 mm and less than 3.2 mm, and delamination and partial fracturing do not occur upon puncturing of lid material of PTP body

× (Poor): Puncture elongation is 3.2 mm or more, or delamination or partial fracturing occurs upon puncturing of lid material of PTP body

(11) Ease of opening recognition

With respect to a PTP body obtained in each example or comparative example, the opening sound when the lid material was punctured to take out contained matter was measured using a sound level meter (NA-29 produced by Rion Co., Ltd.), and ease of opening recognition was evaluated by the following evaluation standard. In measurement of opening sound, the distance between the tip of a microphone and the punctured lid material was set as 30 mm, and an average value of 10 measurements was adopted.

[Evaluation standard]

◎ (Excellent): 80 dB or more
O (Good): Not less than 60 dB and less than 80 dB
✕ (Poor): Less than 60 dB or lid material cannot be punctured

(12) Film odor

A dynamic headspace GC/MS (DHS produced by Gestels; GC-7890 MSD-5977B produced by Agilent Technologies, Inc.) was used to measure the presence or absence of film odor for a lid material for PTP obtained in each example or comparative example. Sample preparation was performed by loading 2 g of the lid material for PTP into a glass bottle having a capacity of 20 mL and performing 30 minutes of heating at 50°C. During the above, 1,950 mL of nitrogen gas was used to cause adsorption of odor components contained in the lid material for PTP to an activated carbon-based adsorbent (Carbopack B/Carbopack X produced by Agilent Technologies, Inc.). Once the heating was complete, a thermal desorption unit (TDU2 produced by Gestels) installed at an injection port of the GC/MS was used to cause desorption of gas adsorbed to the activated carbon-based adsorbent at 300°C in the TDU. During this desorption, gas was reconcentrated at -40°C in a CIS, was then heated to 300°C once again, and was measured by GC/MS. Examples of unpleasant odor components of a lid material for PTP include acetic acid, butanoic acid, and acetyl acetone. Film odor was evaluated as described below based on detected amounts of butanoic acid and acetic acid.

[Evaluation standard]

O (Excellent): Detected amount of butanoic acid is less than 0.01 ppm and detected amount of acetic acid is less than 0.1 ppm
✕ (Poor): Detected amount of butanoic acid is 0.01 ppm or more or detected amount of acetic acid is 0.1 ppm or more

[Example 1]

A two-layer lid material for PTP in which a polypropylene resin (PP) layer (first layer) and a polyolefin-based elastomer (TPO) layer (second layer) were laminated was produced by coextrusion direct inflation.
Specifically, pellets of a resin serving as a material for each layer were melted at equal to or higher than the melting temperature of the resin, and then the layers were each extruded simultaneously using a plurality of extruders. The resin of each extruded layer was fed to an annular die through a feed pipe, and a tube-shaped laminate film in which each layer was laminated was produced through the annular die. The thickness ratio was adjusted such that PP layer:TPO layer = 80:20.
Next, air was blown into the laminate film to cause drawing and thereby obtain a lid material for PTP of 40 μm in thickness. Note that the draw ratio was set as ×30 MD and ×2 TD, and the draw temperature was set as 61°C.
A tablet was loaded into a cavity in a PP bottom material, and then the PP bottom material and the lid material (TPO layer side) were adhered through heat sealing using an Eshin Pack Sealer (Semi-automatic OS produced by Eshin Pack Ind. Co., Ltd.) to obtain a PTP body.
The heat sealing conditions were set as a temperature of 140°C, a pressure of 0.4 MPa, and a time of 1 second.
Measurement/evaluation results for physical properties are shown in Table 1.

[Examples 2 to 5 and Comparative Examples 1 to 3]

In Examples 2 to 5 and Comparative Examples 1 to 3, a lid material for PTP was produced and a PTP body was obtained in the same way as in Example 1 with the exception that materials, amounts, etc. were changed as indicated in Table 1.

Note that for the first layer in Example 5, amorphous aluminosilicate was mixed with polypropylene resin (PP2) prior to extrusion.

Detailed conditions and measurement/evaluation results for physical properties are shown in Table 1.

[Example 6]

In Example 6, a two-layer film in which a first layer and a second layer were laminated was produced in the same way as in Example 1 by changing materials, amounts, etc. as indicated in Table 1. Thereafter, the surface at the first layer side was subjected to corona treatment, and then 10 nm of an inorganic vapor deposition layer (third layer) of aluminum was provided through vacuum vapor deposition to thereby produce a lid material for PTP. A PP bottom material and the lid material (TPO layer side) were adhered in the same way as in Example 1 to obtain a PTP body.

Detailed conditions and measurement/evaluation results for physical properties are shown in Table 1.

[Comparative Example 4]

In Comparative Example 4, a two-layer film in which a first layer and a second layer were laminated was produced in the same way as in Example 1 by changing materials, amounts, etc. as indicated in Table 1. Thereafter, electron beam irradiation with an accelerating voltage of 250 kV and an irradiation dose of 60 kGy was performed with reference to PTL 1 to produce a lid material for PTP. A PP/PE bottom material (PE layer side) and the lid material (PE layer side) were adhered in the same way as in Example 1 to obtain a PTP body.

Detailed conditions and measurement/evaluation results for physical properties are shown in Table 1.

[Comparative Example 5]

With reference to PTL 4, a three-layer laminate film in which a saponified ethylene-vinyl acetate copolymer (EVOH) layer (first layer), an acid-modified polyolefin composition layer (second layer), and a polystyrene resin (PS) layer (third layer) were laminated was produced by coextrusion direct inflation. Note that the thickness ratio of layers was adjusted such that EVOH layer: acid-modified polyolefin composition layer:PS layer = 20:10:70, and the total thickness was set as 40 $\mu$m.

Next, an ethylene-vinyl acetate (EVA) based emulsion-type heat sealant was applied with respect to the PS layer surface of the obtained laminate film such as to have a dry film thickness of 9 $\mu$m, thereby producing a lid material for PTP. A PVC bottom material and the lid material (heat sealant side) were subsequently adhered in the same way as in Example 1 to obtain a PTP body.

Detailed conditions and measurement/evaluation results for physical properties are shown in Table 1.

[Comparative Example 6]

With reference to PTL 5, two types of polypropylene (PP3 and PP4) were laminated through coextrusion, and then a film extruded from a die was cooled in cold water to thereby produce a two-layer undrawn laminate film. Next, the undrawn laminate film was heated to 140°C and was subjected to ×4 MD drawing. Thereafter, a propylene-$\alpha$-olefin copolymer (TPO) was laminated on the PP3 layer through extrusion lamination to produce a three-layer laminate film. Next, ×5 TD drawing was performed at 140°C using a tenter-type drawing machine to produce a lid material for PTP. Note that the thickness ratio of the layers was adjusted such that PP4:PP3:TPO = 20:10:70, and the total thickness was set as 40 $\mu$m. A PP bottom material and the lid material (TPO layer side) were adhered in the same way as in Example 1 to obtain a PTP body.

Detailed conditions and measurement/evaluation results for physical properties are shown in Table 1.

[Table 1]

Table 1

| | | | Unit | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| Lid material | First layer | Type | - | PP1 | PP1 | PP2 | PP1 | PP2 | PP2 | PP3 | PP2 | PP2 | PP4 | EVOH | PP4 |
| | | Amount | Parts by mass | 100 | 100 | 100 | 100 | 99 | 100 | 100 | 100 | 100 | 100 | 100 | 100 |
| | | Type | - | - | - | - | - | Alumino silicate | - | - | - | - | - | - | - |
| | | Amount | Parts by mass | - | - | - | - | 1 | | | - | -- | -- | - | - |
| | | Thickness | μm | 32 | 64 | 32 | 32 | 32 | 32 | 32 | 24 | 16 | 32 | 8 | 8 |
| | Second layer | Type | - | TPO | TPO | TPO | TPO | TPO | TPO | TPO | TPO | TPO | PE | Acid-modified polyolefin | PP3 |
| | | Amount | Parts by mass | 100 | 100 | 100 | 100 | 100 | 100 | 100 | 100 | 100 | 100 | 100 | 100 |
| | | Thickness | μm | 8 | 16 | 8 | 8 | 8 | 8 | 8 | 16 | 24 | 8 | 4 | 4 |
| | Third layer | Type | - | - | - | - | - | - | Aluminum | - | - | - | - | PS | TPO |
| | | Amount | Parts by mass | - | - | - | - | - | 100 | - | - | - | - | 100 | 100 |
| | | Thickness | μm | - | - | - | - | - | 0.01 | - | - | - | - | 28 | 28 |
| | Fourth layer | Type | - | - | - | - | - | - | - | - | - | - | - | EVA | - |
| | | Amount | Parts by mass | - | - | - | - | - | - | - | - | - | - | 100 | - |
| | | Thickness | μm | - | - | - | - | - | - | - | - | - | - | 9 | - |
| PTP body | | | | | | | | | | | | | | | |

(continued)

| Category | Property | Unit | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| | Enthalpy of crystal fusion | J/g | 73 | 85 | 82 | 80 | 84 | 81 | 79 | 61 | 45 | 72 | 32 | 60 |
| | Crystallinity | % | 47 | 49 | 49 | 50 | 58 | 49 | 49 | 44 | 40 | 48 | - | 41 |
| | MD degree of orientation | - | 0.04 | 0.03 | 0.001 | 0.018 | 0.012 | -0.002 | 0.06 | -0.006 | 0.01 | 0.04 | - | -0.28 |
| | Bottom material Type | - | PP | PP | PP | PP | PP | PP | PP | PP | PP | PP/PE | PVC | PP |
| | Bottom material Thickness | μm | 300 | 300 | 300 | 300 | 300 | 300 | 300 | 300 | 300 | 300 | 250 | 300 |
| Production | Draw ratio (MD/TD) | × | 30/2.0 | 20/1.5 | 30/2.0 | 30/2.0 | 30/2.0 | 30/2.0 | 30/2.0 | 30/2.0 | 30/2.0 | 30/2.0 | 15/1.5 | 20/1.5 |
| | Draw temperature | °C | 61 | 75 | 112 | 147 | 102 | 108 | 98 | 96 | 101 | 95 | 135 | (Water cooled) |
| | Water vapor permeability (converted for 40 μm) | g/m²·day | 5.8 | 5.5 | 5.6 | 5.4 | 5.2 | 0.3 | 5.4 | 5.9 | 6.9 | 6.8 | 120 | 11.5 |
| | Tensile strength (MD/TD) | MPa | 37/35 | 36/35 | 35/33 | 35/33 | 36/35 | 34/34 | 35/32 | 26/24 | 37/22 | 30/29 | 39/41 | 45/92 |
| | Tensile elongation (MD/TD) | % | 13.2/6.5 | 10.3/5.6 | 9.0/5.8 | 8.2/4.7 | 7.8/5.6 | 8.7/5.5 | 165/138 | 190/6.4 | 865/527 | 18/7 | 9.8/9.1 | 23/85 |
| | Tensile modulus of elasticity (MD/TD) | MPa | 1010/990 | 1030/1010 | 1020/1020 | 1060/1050 | 1060/1060 | 1080/1060 | 950/910 | 860/850 | 720/710 | 1000/980 | 2010/1930 | 220/350 |
| | Sealing strength | N/15 mm | 6.5 | 5.9 | 7.5 | 6.9 | 7.2 | 7 | 7.1 | 6.4 | 6.3 | 10.5 | 6.9 | 7.1 |
| | Puncture strength (converted for 40 um) | N | 13.4 | 12.7 | 10.8 | 10.2 | 8.9 | 10.4 | 16.5 | 11.1 | 17.9 | 7.5 | 11.7 | 18.7 |
| Physical properties | Puncture elongation | mm | 2.9 | 2.4 | 1.9 | 2.2 | 1.2 | 1.8 | 4.2 | 4.8 | 4.7 | 1.3 (delamination/ partial fracturing) | 1.7 (delamination/ partial fracturin9) | 4.5 |

| | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| Maximum load reduction during puncture test breaking | N/mm | 11.5 | 10.7 | 10.2 | 9.3 | 8.8 | 9.9 | 16.1 | 10.7 | 17.2 | 6.3 | 4.2 | 18.2 |
| Outward penetrability | - | O | ◎ | ◎ | ◎ | ◎ | ◎ | × | × | × | × | × | × |
| Ease of opening recognition | - | ◎ | ◎ | ◎ | ◎ | ◎ | ◎ | × | × | × | ◎ | O | × |
| Film odor (butanoic acid/ acetic acid detection) | - | O | O | O | O | O | O | O | O | O | × | × | O |

INDUSTRIAL APPLICABILITY

The lid material for a PTP body of the present disclosure can suitably be used in packaging of a medicine such as a tablet or capsule or of a food such as a candy or chocolate.

REFERENCE SIGNS LIST

1    PTP body
2    lid material for PTP
3    bottom material
4    cavity
5    flange portion
6    contained matter

**Claims**

1. A lid material for PTP comprising a polypropylene-based resin having a weight-average molecular weight of $2.0 \times 10^5$ to $3.5 \times 10^5$, wherein the lid material for PTP has an enthalpy of crystal fusion of 70 J/g or more as measured by a differential scanning calorimeter (DSC).

2. The lid material for PTP according to claim 1, having an MD degree of orientation of -0.035 to 0.035.

3. The lid material for PTP according to claim 1 or 2, wherein on a load-displacement curve for the lid material for PTP in a puncture test, maximum load reduction per 0.1 mm of displacement in a breaking region is 3 N to 20 N.

4. The lid material for PTP according to any one of claims 1 to 3, having a thickness of 10 $\mu$m to 100 $\mu$m, a water vapor permeability of 10 g/m$^2$·day or less, a tensile strength of 20 MPa to 50 MPa for both MD and TD, and a tensile elongation of 15% or less for both MD and TD.

5. The lid material for PTP according to any one of claims 1 to 4, comprising 0.1 mass% to 3 mass% of an inorganic material.

6. The lid material for PTP according to any one of claims 1 to 5, comprising: a layer containing the polypropylene-based resin; and at least one surface layer containing a polyethylene-based resin, a polypropylene-based resin, or a polyolefin-based elastomer.

7. A PTP body comprising: the lid material for PTP according to any one of claims 1 to 6; and a bottom material having a cavity that accommodates contained matter.

EP 4 253 278 A1

# FIG. 1

FIG. 2

## INTERNATIONAL SEARCH REPORT

| International application No. |
| --- |
| **PCT/JP2021/038438** |

**A.    CLASSIFICATION OF SUBJECT MATTER**

*B65D 65/40*(2006.01)i; *B32B 27/32*(2006.01)i; *B65D 75/36*(2006.01)i
FI:    B65D65/40 D; B65D75/36; B32B27/32 E

According to International Patent Classification (IPC) or to both national classification and IPC

**B.    FIELDS SEARCHED**

Minimum documentation searched (classification system followed by classification symbols)

B65D65/40; B32B27/32; B65D75/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2012-1588 A (MITSUBISHI PLASTICS INC) 05 January 2012 (2012-01-05) claims, paragraphs [0005], [0015], examples | 1-7 |
| A | JP 11-105217 A (TOHCELLO CO LTD) 20 April 1999 (1999-04-20) claims, examples | 1-7 |
| A | JP 9-240727 A (SUMITOMO BAKELITE CO LTD) 16 September 1997 (1997-09-16) claims | 1-7 |
| A | WO 2018/235835 A1 (ASAHI KASEI KABUSHIKI KAISHA) 27 December 2018 (2018-12-27) | 1-7 |
| P, A | JP 2021-30501 A (MITSUBISHI CHEM HOLDINGS CORP) 01 March 2021 (2021-03-01) | 1-7 |

☐ Further documents are listed in the continuation of Box C.          ☑ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **09 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

Form PCT/ISA/210 (patent family annex) (January 2015)

INTERNATIONAL SEARCH REPORT
Information on patent family members

International application No.

**PCT/JP2021/038438**

| Patent document cited in search report | | | Publication date (day/month/year) | Patent family member(s) | | | Publication date (day/month/year) |
|---|---|---|---|---|---|---|---|
| JP | 2012-1588 | A | 05 January 2012 | (Family: none) | | | |
| JP | 11-105217 | A | 20 April 1999 | (Family: none) | | | |
| JP | 9-240727 | A | 16 September 1997 | (Family: none) | | | |
| WO | 2018/235835 | A1 | 27 December 2018 | US<br>EP | 2020/0165045<br>3643639 | A1<br>A1 | |
| JP | 2021-30501 | A | 01 March 2021 | (Family: none) | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7256842 A
- JP H10101133 A
- JP H911422 A
- JP 2000007026 A
- JP 2000025173 A
- JP 2013234002 A